# EUROPÄISCHE PATENTANMELDUNG

(11) **EP 1 782 949 A1**
(43) Veröffentlichungstag der Anmeldung: **09.05.2007**
(21) Anmeldenummer: 05405524.9
(22) Anmeldetag: 07.09.2005
(51) Int. Cl.: B32B 37/12, B32B 37/15

(54) **Verfahren zur Herstellung eines Laminates**

(71) Anmelder: Alcan Technology & Management Ltd., 8212 Neuhausen am Rheinfall (CH)
(72) Erfinder: Nägeli, Hans R., 8212 Neuhausen am Rheinfall (CH)

(57) **Zusammenfassung**

Bei einem Verfahren zur Herstellung eines Laminates (48) aus zwei über eine Klebstoffschicht miteinander verbundenen folienförmigen Substraten (44, 46) wird ein erstes Substrat (44) über eine Flüssigfilm-Beschichtung mittels Vorhangguss oder Gleitbeschichtung mit einem mehrschichtigen, wenigstens zwei Klebstoffschichten (34, 38) umfassenden Flüssigfilm beschichtet und nachfolgend mit dem zweiten Substrat (46) verbunden. Das Verfahren ermöglicht auf einfache und kostengünstige Weise die Verklebung unterschiedlicher Substrate mit spezifisch auf die Oberflächen abgestimmten Klebstoffschichten.

## Beschreibung

Die Erfindung betrifft ein Verfahren zur Herstellung eines Laminates aus zwei über eine Klebstoffschicht miteinander verbundenen folienförmigen Substraten.

Die heutige Kaschiertechnologie bei der Verpackungsherstellung basiert auf mittels Rollenbeschichtung aufgebrachten Einzelschichten. Beim Verkleben verschiedener Materialien, wie beispielsweise Aluminium und Polypropylen, muss bezüglich der eingesetzten Klebstofffilme ein Kompromiss zwischen den optimalen Eigenschaften zur Haftung auf der Aluminiumoberflärhe und der Polypropylenoberfläche gefunden werden. Für die Haftungsentwicklung eines Klebers muss somit ein Kompromiss zwischen der optimalen Formulierung für Aluminium und Polypropylen eingegangen werden. Optimale Klebstoffschichten erfordern daher oft teure Formulierungen. Gegebenenfalls müssen zur Erzielung einer optimalen Haftung zusätzliche Primer eingesetzt werden, die entweder separate Maschinendurchgänge oder zusätzliche Auftragsstationen benötigen.

Zur Herstellung mehrschichtiger fotografischer Filme und Papiere wird seit Jahrzehnten ein unter dem Begriff "Curtain Coating" oder "Vorhangguss" bekannt gewordenes Flüssigfilm-Beschichtungsverfahren eingesetzt. Bei diesem Beschichtungsverfahren werden gleichzeitig mehrere Schichten aus einer Schlitzdüse in einem frei fallenden Vorhang auf eine laufende Materialbahn aufgetragen.

Es ist auch schon vorgeschlagen worden, die Vorhanggusstechnologie zur Beschichtung von Papier und zur Herstellung von Kunststoffverbundmaterialien einzusetzen.

In der WO-A-0154828 ist ein Verfahren zur Herstellung eines mehrschichtigen Verpackungslaminates mit wenigstens zwei übereinander liegenden Schichten offenbart, bei welchem Verfahren zwei oder mehr Schichten mittels Vorhangguss auf ein Substrat aus einem gegebenenfalls bereits beschichteten Papier, Karton oder Kunststofffilm flüssig aufgetragen und nachfolgend getrocknet werden. Die Flüssigfitm-Beschichtungen umfassen Klebstoffschichten, Barriereschichten, Zwischenschichten als Abstandshalter, Sauerstoff-Scavenger-Schichten und Heisssiegelschichten.

Aus der US-B-6 845 599 ist ein zur Vorhanggusstechnologie alternatives Flüssigfilm-Beschichtungsverfahren unter der Bezeichnung "Slide Coating", nachfolgend "Gleitbeschichtung" genannt, bekannt. Bei diesem Beschichtungsverfahren werden gleichzeitig mehrere Schichten aus einer Schlitzdüse von einer Düsengleiffläche direkt auf ein an der Ablaufkante der Düsengleitfläche vorbeigeführtes Substrat aufgetragen.

Der Erfindung liegt die Aufgabe zugrunde, ein Verfahren der eingangs genannten Art zu schaffen, mit welchem unterschiedliche Substrate einfach und kostengünstig verklebt werden können.

Zur erfindungsgemässen Lösung der Aufgabe führt, dass ein erstes Substrat über eine Flüssigfilm-Beschichtung mittels Vorhangguss oder Gleitbeschichtung mit einem mehrschichtigen, wenigstens zwei Klebstoffschichten umfassenden Flüssigfilm beschichtet und nachfolgend mit dem zweiten Substrat verbunden wird.

Jede der Klebstoffschichten ist auf die Oberfläche des jeweils angrenzenden Substrats funktionell optimiert. Die spezifisch auf ein bestimmtes Substrat angepassten Klebstoffformulierungen sind oft kostspielige Produkte. Bevorzugt wird deshalb ein Flüssigfilm eingesetzt, der zwei Klebstoffschichten und eine zwischen den Klebstoffschichten angeordnete Zwischenschicht aufweist, wobei die Dicke der Klebstoffschichten geringer ist als die Dicke der Zwischenschicht. Die Dicke der Klebstoffschichten beträgt zweckmässigerweise etwa 1 bis 30 %, vorzugsweise 1 bis 10 %, der Dicke der Zwischenschicht.

Bevorzugt besteht die Zwischenschicht aus einem kostengünstigen Material, wie z. B. ein Klebstoff auf Urethanbasis, insbesondere aus einem Standard Urethan-Klebstoff, wie z.B aromatische oder aliphatische Isocyanate.

Die Klebstoffschichten können beispielsweise aus Klebstoffen auf Urethanbasis, beispielsweise Polyether-, Polyester- oder Polybutadienpolyole, Acrylat- oder Epoxybasis oder aus Kombinationen der genannten Klebstoffe zusammengesetzt sein.

Die Schichten des Flüssigfilms können lösemittelbasiert, lösemittelfrei oder wasserbasiert sein. Lösemittetfreie Beschichtungsfluide werden bevorzugt, da bei diesen der übliche Trocknungsschritt entfällt.

Als Substrate können Kunststofffilme aus beispielsweise Polyethylenterephthalat (PET), Polyethylen (PP), Polypropylen (PP), Polyamid (PA), Metallfolien, wie z. B. Aluminiumfolien, gegebenenfalls mit einem Barrierematerial aus beispielsweise SiOₓ beschichtet, Papier oder eine Kombination aus wenigstens zwei der vorstehend genannten Materialien eingesetzt werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 den Verfahrensablauf bei der Verbindung von zwei Substraten mittels Vorhangguss im Querschnitt;
- Fig. 2 einen Querschnitt durch ein Detail von Fig. 1 nach deren Linie I-I;
- Fig. 3 einen Querschnitt durch ein Detail von Fig. 1 nach deren Linie II-II;
- Fig. 4 das zum Vorhangguss von Fig. 1 alternative Gleitbeschichtungsverfahren im Querschnitt.

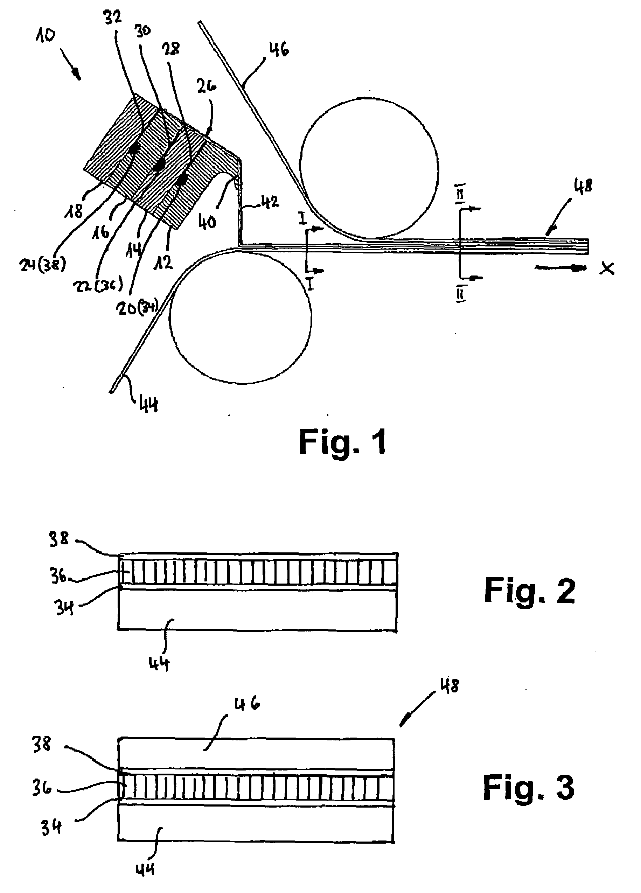

Eine in Fig. 1 gezeigte Düsenanordnung 10 einer nicht näher dargestellten Gleitflächen-Beschichtungsvorrichtung für eine Flüssigfilm-Beschichtung mittels Vorhangguss weist vier einander anliegende Module 12, 14, 16, 18 auf. Die aneinandergereihten Module 12, 14, 16, 18 bilden insgesamt drei quer zu einer Bahnlaufrichtung x angeordnete Verteilkammern 20, 22, 24 mit je einem an einer Düsengleitfläche 26 endenden Austrittsschlitz 28, 30, 32. Die Verteilkammem 20, 22, 24 werden entsprechend der gewünschten Austrittsmenge an der Düsengleitfiäche 26 separat und dosiert mit Beschichtungsfluiden 34 (Klebstoff), 36 (Zwischenschicht), 38 (Klebstoff) versorgt.

Die aus den Verteilkammern 20, 22, 24 über die Austrittsschlitze 28, 30, 32 an der Düsengleitfläche 26 austretenden und in Schichten übereinandergelegten Beschichtungsfluide 34, 36, 38 laufen als dreischichtiger Flüssigkeitsfilm über eine am Modul 12 angeordnete Ablaufkante 40 und bilden einen frei fallenden Vorhang 42.

Der aus den Beschichtungsfluiden 34, 36, 38 aufgebaute dreischichtige Vorhang 42 trifft im wesentlichen senkrecht auf eine sich in Laufrichtung x bewegende erste Substratbahn 44 und bildet auf deren Oberfläche die in Fig. 2 gezeigte fluide Beschichtung.

Der mit den Beschichtungsfluiden 34, 36, 38 beschichteten ersten Substratbahn 44 wird in Bandlaufrichtung x eine zweite Substratbahn 46 zugeführt und mit der beschichteten ersten Substratbahn 44 zu einem in Fig. 3 gezeigten Laminat 48 verklebt.

Mit dem in Fig. 1 dargestellten Verfahrensablauf kann z. B. ein Laminat aus einer Aluminiumfolie und einem PET-Film wie folgt gefertigt werden. Eine Aluminiumfolie wird mit einem dreischichtiger Flüssigkeitsfilm beschichtet, und die beschichtete Aluminiumfolie wird anschliessend mit einem PET-Film verklebt. Der dreischichtige Flüssigkeitsfilm besteht aus einer ersten, auf die Aluminiumoberfläche optimierten Klebstoffschicht auf Urethan-, Acrylat- oder Epoxybasis, einer mittleren Schicht aus einem Standard Urethan-Klebstoff und aus einer zweiten, auf die PET-Oberfläche optimierten Klebstoffschicht auf Urethan-, Acrylat- oder Epoxybasis. Die Dicke der beiden aussenliegenden Klebstoffschichten beträgt etwa 10 % der Dicke der mittleren Schicht.

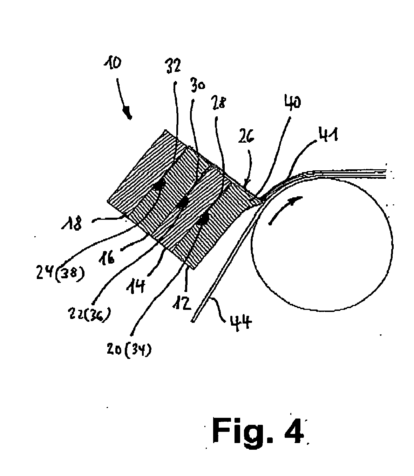

Fig. 4 zeigt eine Düsenanordnung 10 mit einem im wesentlichen gleichen Aufbau wie die Düsenanordnung von Fig. 1, wobei die Ablaufkante 40 zur Durchführung des Gleitbeschichtungsverfahrens angepasst ist. Der dreischichtige Flüssigkeitsfilm 41 gleitet hier von der Ablaufkante 40 direkt auf die an der Ablaufkante 40 vorbeigeführte Substratbahn 44.

## Patentansprüche

1. Verfahren zur Herstellung eines Laminates (48) aus zwei über eine Klebstoffschicht miteinander verbundenen folienförmigen Substraten (44, 46),
**dadurch gekennzeichnet, dass**
ein erstes Substrat (44) über eine Flüssigfilm-Beschichtung mittels Vorhangguss oder Gleitbeschichtung mit einem mehrschichtigen, wenigstens zwei Klebstoffschichten (34, 38) umfassenden Flüssigfilm beschichtet und nachfolgend mit dem zweiten Substrat (46) verbunden wird.

2. Verfahren nach Anspruch 1, **dadurch gekennzeichnet, dass** jede der Klebstoffschichten (34, 38) auf die Oberfläche des angrenzenden Substrats (44, 46) funktionell optimiert ist.

3. Verfahren nach Anspruch 1 oder 2, **dadurch gekennzeichnet, dass** der Flüssigfilm zwei Klebstoffschichten (34, 38) und eine zwischen den Klebstoffschichten (34, 38) angeordnete Zwischenschicht (36) aufweist.

4. Verfahren nach Anspruch 3, **dadurch gekennzeichnet, dass** die Dicke der Klebstoffschichten (34, 38) geringer ist als die Dicke der Zwischenschicht (36).

5. Verfahren nach Anspruch 4, **dadurch gekennzeichnet, dass** die Dicke der Klebstoffschichten (34, 38) 1 bis 30 %, vorzugsweise 1 bis 10 %, der Dicke der Zwischenschicht (36) beträgt.

6. Verfahren nach einem der Ansprüche 1 bis 5, **dadurch gekennzeichnet, dass** die Klebstoffschichten (34, 38) aus Klebstoffen auf Urethanbasis, insbesondere Polyether-, Polyester oder Polybutadienpolyole, Acrylat- oder Epoxybasis oder aus Kombinationen der genannten Klebstoffe zusammengesetzt sind.

7. Verfahren nach Anspruch 3, **dadurch gekennzeichnet, dass** die Zwischenschicht (36) aus einem Klebstoff auf Urethanbasis, insbesondere aus aromatischen oder aliphatischen Isocyanaten, besteht.

8. Verfahren nach einem der Ansprüche 1 bis 7, **dadurch gekennzeichnet, dass** die Schichten (34, 36, 38) des Flüssigfilms lösemittelbasiert, lösemittelfrei oder wasserbasiert sind.

9. Verfahren nach einem der Ansprüche 1 bis 8, **dadurch gekennzeichnet, dass** die Substrate (44, 46) Kunststofffilme, Metallfolien, Papier oder eine Kombination aus wenigstens zwei der vorstehend genannten Materialien sind.
